# EUROPEAN PATENT SPECIFICATION

(11) **EP 1 432 872 B1**
(45) Date of publication and mention of the grant of the patent: **29.04.2009**
(21) Application number: 02775646.9
(22) Date of filing: 07.10.2002
(51) Int. Cl.: E01C 7/26, C08L 25/00, E01C 19/00

(54) **A ROAD SURFACING FOR REDUCING ROLLING NOISE**
STRASSENDECKE ZUR GERÄUSCHMINDERUNG DES ROLLENDEN STRASSENVERKEHRS
REVETEMENT DES ROUTES PERMETTANT DE REDUIRE LES BRUITS DE ROULEMENT

(30) Priority: 05.10.2001 SE 0103335
(43) Date of publication of application: 30.06.2004
(73) Proprietor: Acoustic Control AB, S-183 66 Täby (SE)
(72) Inventor: NILSSON, Nils-Ake, S-187 33 Täby (SE)
(74) Representative: Säfwenberg, Björn
(86) International application number: PCT/SE2002/001823
(87) International publication number: WO 2003/031723

(56) References cited:
- EP-A1- 0 952 188
- DE-A1- 3 037 390
- GB-A- 1 352 561
- US-A- 6 043 302

## Description

The present invention concerns a road surfacing for reducing rolling noise and including particles bonded together so as to form between them air-permeable channels. The invention also concerns a road surface material lending a road surfacing made thereof noise reducing properties, as well as methods for producing and paving (laying) said material to achieve the finished road surface.

A road surfacing of the general kind stated is disclosed in EP-A-0 028 238 by the present inventor. It is made up of balls or chips of rubber or some other rubber-like material, and the individual particles thereof are bonded together such that communicating spaces are formed between the particles, thus forming air-permeable channels throughout the road surfacing.

Another road surface is known from document DE-A-3 037 390.

It has turned out that this road surfacing achieves the desired objectives regarding noise reduction, but its inferior strength and durability as well as difficulties in laying it out on longer road sections as compared to a normal road surfacing containing stone ballast material and bitumen makes it uneconomical for public use.

It would be desirable, thus, and it is the object of the present invention, to combine the durability of a normal road surfacing and the teachings of EP-A-0 028 238 to achieve a road surfacing being durable as well as having at least the noise reduction properties of the road surfacing according to EP-A-0 028 238.

To meet this desire, the present invention proposes a road surface material having a ballast material including granules of stone and rubber and a bitumen binder adhering to the granules of stone and rubber, the granules of stone having particle sizes ranging from 0.5 to 24 mm, and the granules of rubber having particle sizes ranging from 0.5 to 8 mm.

It should be noted that the largest stone particle sizes (e.g. > 11 mm) are intended for lower levels of a multi-layer road surfacing in order to provide good draining properties, and that the smaller particle sizes (about 0.5 - 11 mm) are those providing the road surfacing with its noise reducing properties. In other words, in a multi-layer road surfacing, there may typically be an ordinary substratum comprising macadam, and an upper, or, surface layer according to the present invention including stone particles ranging from about 0.5 to about 11 mm.

The present invention also proposes a road surfacing for reducing rolling noise, which includes particles bonded together so as to form between them air-permeable channels, and which is **characterised in that** the particles comprise granules of stone and rubber, and that a bitumen binder adheres to the granules of stone and rubber, the granules of stone having particle sizes ranging from 0.5 to 24 mm, and the granules of rubber having particle sizes ranging from 0.5 to 8 mm.

It is desirable that there is no contact between adjacent granules of stone, but that there shall always be a rubber particle between each two stone particles.

It should be mentioned that CH-A-410 031 discloses a road surfacing containing fine granule macadam and bitumen, which is mixed with rubber. However, the wording of this document cannot be interpreted otherwise than that the layer of macadam mentioned is completely soaked with bitumen and rubber granules, thus rendering a road surfacing layer completely dense i.e., having no communicating voids or channels therethrough, thus possibly making this prior art road surfacing flexible but not porous. It is well known that a road surfacing being elastic (flexible) but not porous is more noisy than an ordinary (hard) road surfacing.

The contents of rubber material used in the road surface material and the road surfacing of the present invention is about 8 - 40% by volume of the entire ballast material, preferably about 10 - 25%. Furthermore, the rubber contents are 6 - 25% by weight of the entire road surfacing composition.

When manufacturing a road surface material according to the present invention, a bitumen, preferably a polymer modified bitumen (PMB) polymer modified with, e.g., SBS (Styrene-Butadien-Styrene) with a high vinyl content, is heated to at least 150°C, preferably to about 170°C - 190°C. SBS, typically 1 % to 6 % of the total bitumen weight, could also be added as powder directly into the hot blender unit or directly into the main plant mixer. Rubber, for instance used tires, are ground to form rubber granules (grains) having particle sizes ranging from approximately 0.5 to approximately 8 mm. The heated bitumen is fed together with the rubber granules (at ambient temperature) into a heated blender unit, where the rubber granules are mixed into the bitumen. The mixture is heated to a temperature in the range of about 150 - 190 °C and is kept in the blender unit for typically 20 - 40 minutes, thereby achieving evaporation of possible water contents (moisture) in the rubber as well as a certain degree of melting of the surface regions of the rubber granules in order to modify the surface chemistry (electrical dipole characteristics) of the bitumen/rubber interface, thereby improving the bonding between the bitumen and the rubber granules. Another achievement is that the rubber is saturated with bitumen.

In an alternative method for heat treating rubber granulate, cold and dry rubber granulate is fed into a plant mixer and bitumen heated to a certain over-temperature resulting in a suitable end temperature of the finished mixture is added. Mixing continues until the rubber is saturated with bitumen, preferably 2 - 10 minutes.

A stone ballast material having particle sizes ranging from about 0.5 mm to about 11 mm (for a majority of particles) is heated to about 200°C and fed into a mixer, and the bitumen/rubber mixture is added thereto at a temperature of about 190°C. After proper mixing, the road surface material is ready for transportation to a road construction site at a temperature of 140°C to about 170°C.

In order to increase the amount of rubber granulate, a portion not more than 100 % of the amount of rubber granules wetted by the bitumen, could be added dry directly into the main plant mixer.

When the rubber granulate contains a large proportion of natural rubber, as the case may be when winter and friction tires are used as raw material for the granulate, it has been found that the rubber granulate soaks excessive amounts of bitumen that may lead to disintegration of the road surfacing composition. In order to overcome this problem, the present invention proposes to pre-coat the rubber granulate. This may be done:
1) either with a suitable polymer material forming a film coating protecting the granulates from absorbing bitumen or bitumen fractions; or
2) with warm bitumen or bitumen as an emulsion, such that the rubber is saturated in advance with bitumen and, thus, cannot soak more bitumen in the finished road surfacing. In case an emulsion is used, e.g. 20% aqueous emulsion is added resulting in 10% remaining bitumen on the rubber granules. This mixture is then kept warm and dry. After about 14 days the clods of rubber granules may be crumbled to granule powder again since the rubber has soaked and absorbed the amount of bitumen added.

Another way to improve the properties of the rubber granulate is to ensure that a maximum proportion of the rubber granulate is of the synthetic rubber type. This may be accomplished by rejecting winter and friction tires and only use summer tires. The resulting granulate, principally consisting of synthetic rubber, has a limited bitumen soaking ability.

At the road construction site, the material is fed into an asphalt paving, or, surfacing machine at a temperature of about 150°C. During vibration, the asphalt paving machine lays out a material layer having a thickness of 20 - 150 mm. When the layer has reached a temperature of maximum about 130°C, but not less than 80°C, it is compacted by a roller compactor having rolls vibrating at a zero to peak amplitude of at least 0.7 mm and a frequency of at least 40 Hz, preferably a zero to peak amplitude of 0.8 mm and a frequency of 70 - 90 Hz. It would be desirable, however, to reach a zero to peak amplitude of 1.2 mm. It is preferred to let the roller cross four times over the layer. After this first compression follows a second compression at a vibration zero to peak amplitude of 0.3 mm and a frequency of 70 Hz. Also here, it is preferred to cross four times. Finally, a static packing or compression is performed without vibration and with preferably two crossings.

The road surfacing may comprise two or more layers, a lowermost layer having the largest particles (typically 16 - 24 mm) and an upper, surface layer having the smallest particles (typically 1 - 11 mm). Larger particles are beneficial for drainage and for creating an acoustically active air volume below a more fine-grained surface layer. The lower layers may comprise a traditional road surface material, i.e., without rubber granules, or, it may include rubber granules in order to achieve a further increased elasticity of the entire surface design.

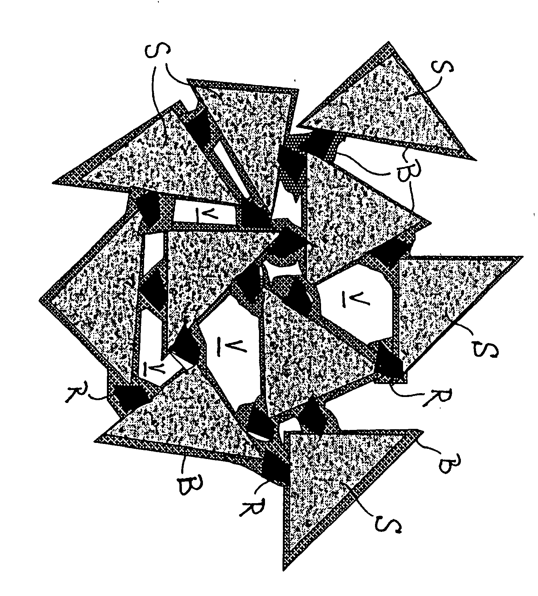

In order to explain more closely the structural composition of a road surfacing according to the present invention, reference is made to the accompanying drawing schematically showing a plurality of randomly oriented ballast particles. These ballast particles include stones S and granulated rubber particles R. Each rubber particle R is shown to be bound to two adjacent stone particles S by a layer of bitumen binder B adhering to the stone particles as well as to the rubber particles. Each rubber particle R serves as an elastic element between two stone particles S, thereby giving the road surfacing important elastic properties. Between the stone particles there remain voids V making the surfacing porous which is necessary for its sound absorption properties as well as beneficial for its drainage properties.

Even if here have been mentioned stone sizes within certain preferred ranges, this does exclude that those smaller stone particles (filler-like or dust-like), that are almost always present in road surface mixes, may be brought along and be mixed into the road surfacing material together with the preferred sizes without departing from the scope of the invention as defined by the claims.

## Claims

1. A road surface material for making a road surface having reduced rolling noise properties by including a ballast material comprising granules of stone and rubber bonded together by a bitumen binder, whereby the granules of stone have particle sizes ranging from 0.5 to 24 mm, and the granules of rubber have particle sizes ranging from 0.5 to 8 mm, that the contents of rubber material is about 8 - 40 % by volume of the entire ballast material, preferably about 10 - 30%, **characterized in that** the bitumen binder adhering to said granules of stone and rubber so as to form between them air-permeable channels, and that the rubber granulate is pre-coated in order to prevent soaking of excessive amounts of bitumen binder in the finished road surface.

2. The road surface material according to claim 1, **characterized in that** the pre-coating is a film of a polymer material protecting the granulates from absorbing bitumen or bitumen fractions.

3. The road surface material according to claim 1, **characterized in that** the pre-coating is bitumen saturating the rubber.

4. The road surface material according to any one of the preceding claims for an uppermost layer of a road surface, **characterized in that** the granules of stone have particle sizes ranging from 0.5 to 11 mm.

5. The road surface material according to any one of the preceding claims for a lower layer of a road surface, **characterized in that** the granules of stone have particle sizes ranging from 8 to 24 mm.

6. The road surfacing according to any one of the preceding claims, **characterized in that** its contents of rubber material is about 8 - 40 % by volume of the entire ballast material, preferably about 10 - 25%.

7. The road surface material according to any one of the preceding claims, **characterized in that** its rubber contents are 6 - 25% by weight of the entire road surfacing composition.

8. The road surface material according to any one of the preceding claims, **characterized in that** the bitumen binder is warm (hot) bitumen.

9. The road surface material according to any one of the preceding claims, **characterized in that** the bitumen binder is a bitumen emulsion.

10. A road surface, including a material according to any one of the preceding claims, **characterized by** a surface thickness of 30 - 200 mm.

11. A method of manufacturing a road surface material according to claim 1, including the steps of heating a bitumen to at least 150°C, grinding a rubber material to form rubber granules, adding the rubber granules to the bitumen, mixing the bitumen and the rubber granules in a hot blender unit, feeding a heated stone ballast material to a main plant mixer, feeding the bitumen and the rubber granules to the main plant mixer and mixing the bitumen, the rubber granules and the stone ballast material, whereby the rubber material is ground to form rubber granules having sizes ranging from 0.5 to 8 mm, the rubber granules are pre-coated in order to prevent soaking of excessive amounts of bitumen, the bitumen and the rubber granules are mixed and heated in the hot blender during 20 - 40 minutes to reach a temperature of about 190°C, and the stone ballast material has particle sizes ranging from 0.5 to 24 mm.

12. The method according to claim 11, whereby additional rubber granules not treated in the hot blender unit are added dry directly into the main plant mixer.

13. The method according to claim 11 or 12, whereby SBS (Styren-Butadien-Styren) is added into the hot blender unit.

14. The method according to claim 11 or 12, whereby SBS (Styren-Butadien-Styren) is added into the main plant mixer.

15. The method according to claim 11, whereby the rubber granulate is pre-coated with a polymer material forming a film coating protecting the granulates from absorbing bitumen or bitumen fractions.

16. The method according to claim 11, whereby the rubber granulate is pre-coated with warm bitumen or bitumen as an emulsion, such that the rubber is saturated in advance with bitumen.

17. A method,of laying a road surface material according to claim 1, including the steps of:
a) feeding the material obtained by the method of claim 11 into an asphalt surfacing machine at a temperature of about 150 °C;
b) laying the material during vibration thereof in a layer having a thickness of 30 - 100 mm;
c) compressing the layer at a temperature of about 80 - 130 °C by a roller compactor vibrating at a zero to peak amplitude of at least 0.7 mm and a frequency of at least 40 Hz, preferably a deflection zero to peak amplitude of 1.2 mm and a frequency of 70 - 90 Hz;
d) compressing the layer by said roller compactor at a vibration amplitude of 0.3 mm and a frequency of about 70 Hz; and
e) compressing the layer statically.

## Patentansprüche

1. Straßenbelagmaterial zur Ausbildung einer Straßendecke, welche die Eigenschaft einer geringeren Rollgeräuschentwicklung aufweist, durch Hinzufügen eines Ballastmaterials, das ein Granulat aus Stein und Gummi umfasst, das mittels eines Bitumenbinders gebunden ist, wobei das Granulat aus Stein eine Korngröße besitzt, die zwischen 0,5 mm und 24 mm liegt, und das Granulat aus Gummi eine Korngröße besitzt, die zwischen 0,5 mm und 8 mm liegt, wobei der Anteil des Gummimaterials etwa 8-40 %, vorzugsweise etwa 10-30 % des Volumens des gesamten Ballastmaterials beträgt,
**dadurch gekennzeichnet,**
**dass** der Bitumenbinder an dem genannten Granulat aus Stein und Gummi anhaftet, so dass dazwischen luftdurchlässige Kanäle ausgebildet werden, und dass das Gummigranulat vorbeschichtet ist, um das Aufsaugen einer zu großen Menge an Bitumenbinder im fertiggestellten Straßenbelag zu verhindern.

2. Straßenbelagmaterial nach Anspruch 1, **dadurch gekennzeichnet, dass** die Vorbeschichtung aus einem Film eines Polymermaterials besteht, welches das Granulat davor schützt, Bitumen oder bituminöse Anteile zu absorbieren.

3. Straßenbelagmaterial nach Anspruch 1, **dadurch gekennzeichnet, dass** die Vorbeschichtung zur Bitumensättigung des Gummis führt.

4. Straßenbelagmaterial nach einem der vorhergehenden Ansprüche zur Ausbildung der obersten Schicht einer Straßendecke, **dadurch gekennzeichnet, dass** das Granulat aus Stein eine Korngröße zwischen 0,5 mm und 11 mm besitzt.

5. Straßenbelagmaterial nach einem der vorhergehenden Ansprüche zur Ausbildung einer unteren Schicht einer Straßendecke, **dadurch gekennzeichnet, dass** das Granulat aus Stein eine Korngröße zwischen 8 mm und 24 mm besitzt.

6. Straßenbelagmaterial nach einem der vorhergehenden Ansprüche, **dadurch gekennzeichnet, dass** der Anteil an Gummimaterial etwa 8-40 %, vorzugsweise etwa 10-25 % des Volumens des gesamten Ballastmaterials beträgt.

7. Straßenbelagmaterial nach einem der vorhergehenden Ansprüche, **dadurch gekennzeichnet, dass** sein Gummianteil 6-25 Gewichts-% der gesamten Straßenbelag-Zusammensetzung beträgt.

8. Straßenbelagmaterial nach einem der vorhergehenden Ansprüche, **dadurch gekennzeichnet, dass** der Bitumenbinder warmer (heißer) Bitumen ist.

9. Straßenbelagmaterial nach einem der vorhergehenden Ansprüche, **dadurch gekennzeichnet, dass** der Bitumenbinder eine Bitumenemulsion ist.

10. Straßendecke umfassend ein Material nach einem der vorhergehenden Ansprüche, **dadurch gekennzeichnet, dass** die Belagstärke 30-200 mm beträgt.

11. Verfahren zur Herstellung eines Straßenbelagmaterials nach Anspruch 1 umfassend die Schritte des Erhitzens des Bitumens auf wenigstens 150°C, des Zermahlens eines Gummimaterials, um Gummigranulat auszubilden, des Hinzufügens des Gummigranulates zu dem Bitumen, des Mischens des Bitumens und des Gummigranulates in einer heizbaren Mischereinheit, des Beschickens einer Hauptmischanlage mit einem erhitzten Stein-Ballastmaterial, des Beschickens der Hauptmischanlage mit dem Bitumen und dem Gummigranulat sowie des Mischens des Bitumens, des Gummigranulates und des Stein-Ballastmaterials, wobei das Gummimaterial zermahlen wird, um ein Gummigranulat mit einer Korngröße zwischen 0,5 mm und 8 mm auszubilden, wobei das Gummigranulat vorbeschichtet wird, um das Aufsaugen zu großer Mengen an Bitumen zu verhindern, wobei der Bitumen und das Gummigranulat in der heizbaren Mischereinheit 20-40 Minuten gemischt und erhitzt werden, bis eine Temperatur von etwa 190°C erreicht wird, und wobei das Stein-Ballastmaterial eine Korngröße zwischen 0,5 mm und 24 mm besitzt.

12. Verfahren nach Anspruch 11, wobei zusätzliches Gummigranulat, das nicht in der heizbaren Mischereinheit vorbehandelt wurde, der Hauptmischanlage direkt, trocken hinzugefügt wird.

13. Verfahren nach Anspruch 11 oder 12, wobei SBS (Styren-Butadien-Styren) in der heizbaren Mischereinheit hinzugefügt wird.

14. Verfahren nach Anspruch 11 oder 12, wobei SBS (Styren-Butadien-Styren) in der Hauptmischanlage hinzugefügt wird.

15. Verfahren nach Anspruch 11, wobei das Gummigranulat mit einem Polymermaterial vorbeschichtet wird, das eine Filmschicht ausbildet, welche das Granulat vor Aufsaugen des Bitumens oder des bituminösen Anteils schützt.

16. Verfahren nach Anspruch 11, wobei das Gummigranulat mit warmen Bitumen oder einer Bitumenemulsion vorbeschichtet wird, so dass das Gummimaterial im voraus bitumengesättigt ist.

17. Verfahren zum Aufbringen des Straßenbelagmaterials nach Anspruch 1 umfassend die Schritte:
a) Beschicken einer Asphalt-Belag-Maschine bei einer Temperatur von etwa 150°C mit einem Material, das Ergebnis des Verfahrens nach Anspruch 11 ist,
b) Aufbringen des Materials unter Einwirkung von Vibrationen in einer Schichtstärke von 30-100 mm,
c) Verdichten der Schicht bei einer Temperatur von etwa 80-130°C mittels einer Straßenwalze, deren Vibrationen eine Amplitude von Null zum Scheitelpunkt von wenigstens 0,7 mm und eine Frequenz von wenigstens 40 Hz aufweisen, vorzugsweise eine Abweichung der Null zum Scheitelpunkt-Amplitude von 1,2 mm und eine Frequenz zwischen 70-90 Hz besitzen,
d) Verdichten der Schicht mittels der genannten Straßenwalze bei einer Schwingungsamplitude von 0,3 mm und einer Frequenz von etwa 70 Hz und
e) statisches Verdichten der Schicht.

## Revendications

1. Matériau de revêtement routier pour produire une surface routière ayant des propriétés de bruit de roulement réduit en incorporant une matière de ballast comprenant des granules de pierre et de caoutchouc liés les uns aux autres par un liant à base de bitume, les granules de pierre ayant des dimensions de particule comprises dans l'intervalle de 0,5 à 24 mm, et les granules de caoutchouc ayant des diamètres de particule compris dans l'intervalle de 0,5 à 8 mm, la quantité de caoutchouc étant comprise dans l'intervalle de 8 à 40 % en volume de la matière de ballast totale, de préférence d'environ 10 à 30 %, **caractérisé en ce que** le liant à base de bitume adhère auxdits granules de pierre et de caoutchouc de manière à former entre eux des canaux perméables à l'air, et les granules de caoutchouc sont prérevêtus afin d'empêcher l'imprégnation de la surface routière finie par des quantités excessives de liant à base de bitume.

2. Matériau de revêtement routier suivant la revendication 1, **caractérisé en ce que** le prérevêtement est un film d'une matière polymère protégeant les granules contre l'absorption du bitume ou de fractions de bitume.

3. Matériau de revêtement routier suivant la revendication 1, **caractérisé en ce que** le prérevêtement est constitué de bitume saturant le caoutchouc.

4. Matériau de revêtement routier suivant l'une quelconque des revendications précédentes pour une couche supérieure terminale d'une surface routière, **caractérisé en ce que** les granules de pierre ont des dimensions de particules comprises dans l'intervalle de 0,5 à 11 mm.

5. Matériau de revêtement routier suivant l'une quelconque des revendications précédentes pour une couche inférieure d'une surface routière, **caractérisé en ce que** les granules de pierre ont des dimensions de particules comprises dans l'intervalle de 8 à 24 mm.

6. Matériau de revêtement routier suivant l'une quelconque des revendications précédentes, **caractérisé en ce que** sa teneur en caoutchouc est comprise dans l'intervalle d'environ 8 à 40 % en volume de la matière de ballast totale, de préférence d'environ 10 à 25 %.

7. Matériau de revêtement routier suivant l'une quelconque des revendications précédentes, **caractérisé en ce que** sa teneur en caoutchouc est comprise dans l'intervalle de 6 à 25 % en poids de la composition totale de revêtement routier.

8. Matériau de revêtement routier suivant l'une quelconque des revendications précédentes, **caractérisé en ce que** le liant à base de bitume consiste en bitume tiède (chaud).

9. Matériau de revêtement routier suivant l'une quelconque des revendications précédentes, **caractérisé en ce que** le liant à base de bitume est une émulsion de bitume.

10. Surface routière, comprenant un matériau suivant l'une quelconque des revendications précédentes, **caractérisée par** une épaisseur de surface de 30 à 200 mm.

11. Procédé pour la production d'un matériau de revêtement routier suivant la revendication 1, comprenant les étapes consistant à chauffer un bitume à au moins 150°C, à broyer un caoutchouc pour former des granules de caoutchouc, à ajouter les granules de caoutchouc au bitume, à mélanger le bitume et les granules de caoutchouc dans une unité de mélangeur à chaud, à introduire une matière de ballast chauffée renfermant des pierres dans un mélangeur principal industriel, à introduire le bitume et les granules de caoutchouc dans le mélangeur principal industriel et à mélanger le bitume, les granules de caoutchouc et la matière de ballast renfermant des pierres, le caoutchouc étant ainsi broyé pour former des granules de caoutchouc ayant des dimensions comprises dans l'intervalle de 0,5 à 8 mm, les granules de caoutchouc étant prérevêtus afin d'éviter l'imprégnation par des quantités excessives de bitume, le bitume et les granules de caoutchouc étant mélangés et chauffés dans le mélangeur à chaud pendant une période de temps de 20 à 40 minutes pour atteindre une température d'environ 190°C, et la matière de ballast renfermant des pierres ayant des dimensions de particules comprises dans l'intervalle de 0,5 à 24 mm.

12. Procédé suivant la revendication 11, par lequel des granules de caoutchouc supplémentaires non traités dans l'unité de mélangeur à chaud sont introduits à sec directement dans le mélangeur principal.

13. Procédé suivant la revendication 11 ou 12, par lequel du SBS (styrène-butadiène-styrène) est introduit dans l'unité de mélangeur à chaud.

14. Procédé suivant la revendication 11 ou 12, par lequel du SBS (styrène-butadiène-styrène) est introduit dans le mélangeur principal.

15. Procédé suivant la revendication 11, par lequel les granules de caoutchouc sont prérevêtus avec une matière polymère formant un revêtement sous forme de film protégeant les granules contre l'absorption de bitume ou de fractions de bitume.

16. Procédé suivant la revendication 11, par lequel les granules de caoutchouc sont prérevêtus avec du bitume chaud ou du bitume sous forme d'émulsion, de telle sorte que le caoutchouc soit préalablement saturé de bitume.

17. Procédé pour déposer un matériau de revêtement routier suivant la revendication 1, comprenant les étapes consistant :
a) à introduire le matériau obtenu par le procédé de la revendication 11 dans une machine de revêtement d'asphalte à une température d'environ 150°C ;
b) à déposer le matériau soumis à des vibrations en une couche ayant une épaisseur de 30 à 100 mm ;
c) à comprimer la couche à une température d'environ 80 à 130°C par un compacteur à rouleau vibrant à une amplitude de 0 à la valeur maximale d'au moins 0,7 mm et une fréquence d'au moins 40 Hz, de préférence à une amplitude de la déflection zéro à la déflection maximale de 1,2 mm et une fréquence de 70 à 90 Hz ;
d) à comprimer la couche par ledit compacteur à rouleau à une amplitude vibratoire de 0,3 mm et une fréquence d'environ 70 Hz ; et
e) à comprimer statiquement la couche.
